# EUROPEAN PATENT APPLICATION

(11) **EP 2 056 574 A1**
(43) Date of publication of application: **06.05.2009**
(21) Application number: 07021173.5
(22) Date of filing: 30.10.2007
(51) Int. Cl.: H04L 29/12, H04L 29/06

(54) **Method for directing a data transmission through a network and communications network**

(71) Applicant: Nokia Siemens Networks Oy, 02610 Espoo (FI)
(72) Inventor: Pereira, Goncalo, Amadora (PT)
(74) Representative: Fischer, Michael

(57) **Abstract**

A network boundary controller (1) compares addresses of the source and destination path network elements of the data transmission as to their mutual identity, whereby a positive identity determination is employed as a measure for directing the data transmission within one subnetwork which the network boundary controller borders.

## Description

A method for direction a data transmission, such as one belonging to a call between two calling parties, along with a communications network with means for carrying out the method, are described.

A telecommunications network setup has several network endpoints, such as CPEs (Customer Premises Equipment), which can be connected in a communicative manner. These endpoints may have different logical and / or physical locations, meaning that they can be located within one subnetwork or in a part of a network logically and / or physically separated from the subnetwork.

US 20030172160 describes a method in which a QoS (Quality of Service) is assured between two network endpoint terminals each associated with a different local access network. For a given media stream, each network endpoint terminal determines whether sufficient resources enabling a QoS are provided in its local access network and sends a confirmation of this to the other network endpoint terminal.

One problem to be solved lies in efficiently directing network traffic through different parts of a network, including at least one subnetwork, with minimal bandwidth usage.

A method for directing a data transmission through a network is described, whereby a network boundary controller bordering a subnetwork compares addresses of source and destination path network elements of the data transmission as to their mutual identity. Where the comparison yields a positive identity determination, said determination is employed as a measure for directing the data transmission within the subnetwork.

A network boundary controller is considered to be a network element receiving and transmitting network traffic from / to a given subnetwork, whereby the network boundary controller has control over whether the network traffic is re-directed into the subnetwork or passed onto an external network.

The term boundary in network boundary controller refers to a point or line of demarcation between one part of a communications network and another. For example, at the edge of a corporate network, a firewall demarks the local network inside the corporation from the rest of a network outside the corporation.

A subnetwork is considered to be a part of a communications network under the administrative control of, for example, one administrative entity, such as a corporate local access network. Other examples of subnetworks are those under the control of a government, a university, a firm, institution or other legal person.

An external network is considered to be any network at least not logically part of one subnetwork. An external network is considered to be a part of a communications network and may connect a plurality of subnetworks to each other. An IP backbone network through which two subnetworks are connectable is considered to be an example of an external network.

A data transmission is considered to comprise, for example, a call passed through a network, a video supported telephone conference call, a VoIP (Voice over IP) call, a media stream such as streaming video and / or VoD (Video on Demand).

A source path network element is considered to be a network element at the source network environment of a data transmission path.

A destination path network element is considered to be a network element at the destination network environment of a data transmission path.

Source and destination network environments are considered to be those connected to a source or destination endpoint without needing to traverse a network boundary, such as a firewall, a LAN or VLAN demarcation line. In particular, they are considered to be those within the same subnetwork that a network endpoint, such as a CPE (Customer Premises Equipment), is located. Thus, source and destination network path network elements are local to network endpoints with the respective subnetwork. Network endpoints can themselves be considered as source or destination path network elements of a data transmission.

The described method is advantageous in that data transmissions with paths internal to a subnetwork, henceforth termed local data transmissions, can be directed entirely locally, thereby significantly reducing the amount of traffic that is leaving the subnetwork. This proffers using minimal or at least less amount of bandwidth allocated to network connections external to the subnetwork. Usage of network resources outside the subnetwork can thus be minimised.

Since local data transmissions are identified by the proposed method as such, operator policies like charging per data flow and appropriate bandwidth reservation along with assurance of QoS (Quality of Service) can be effectively carried out depending on whether the data transmission was determined as being local or not. Said operator policies can be applied in a different manner depending on whether the data transmission is identified as being local or not. For example, charging for a local data flow can be avoided and instead only applied to data flows classified as being non-local.

According to one implementation of the method, the data transmission is classified as being local according to the positive identity determination. This classification information can be used as a simple measure to direct the data transmission solely within its local network environment without having to pass through an external network.

Where a positive identity determination is lacking, the data transmission is classified as being non-local. The data transmission may then be directed through an external network.

The classification of the data transmission being local or non-local is preferably carried out by the network boundary controller.

According to one implementation of the method, a PDF (Policy Decision Function) may be invoked by the network boundary controller, whereby the PDF could be directly mounted thereon.

The PDF may decide upon whether the data transmission is to be passed through an external network based on the bandwidth available in the transmission path outside of the subnetwork. The use of a PDF in combination with a measure of the locality of the destination address of a data transmission is an example of a previously not seen scalable augmentation to network resources, as no further network elements or resources are needed beyond simple modification of the PDF to work together with classification information of the network boundary controller regarding the locality of the data transmission.

Thus, the PDF, according to one implementation of the method, allocates bandwidth to the data transmission based on its recognition of the nature of locality of the data transmission.

An advantage of using a PDF in conjunction with the directing of data transmissions based on their type of locality is the additional configurability of network access policies.

According to a preferred implementation of the method, the PDF itself controls directing the data transmission based on the bandwidth available in the data packet's transmission path. The advantage of this implementation is the ability to control the data flow inwards and outwards of the subnetwork based on traffic load, thus avoiding bandwidth over-allocation or under-allocation.

According to a preferred implementation of the method, the PDF directly allocates bandwidth to a data transmission. This implementation has the advantage of making the data flow over the border of a subnetwork controllable. Not employing such techniques could result in for example rejecting a call even though there would still be available bandwidth.

According to one preferred implementation the method, the source or destination path network element of the data transmission is the address of a network element comprising a Network Address Translation function. Such a network element is henceforth termed NAT (Network Address Translator). The NAT may be a network element comprising other functions, in particular switching and / or routing of network traffic within or at one subnetwork. An example of such a network element is a server, router or switch.

Usage of an NAT as a source or destination path network element advantageously enables consideration of a single IP address for a series of network endpoints connected to the NAT. Where the network boundary controller is connected to the NAT, the network boundary controller need not consider different addresses of network endpoints belonging to one subnetwork that includes the NAT. Instead, the network boundary controller merely considers one IP address delivered to it by the NAT.

Both the source and destination path network elements may be NATs. This has the further advantage of comparing the addresses of both the source and destination path network elements as summarised by a unique network address provided by each NAT.

The source and destination NATs are, according to an implementation of the method, one and the same. This means that the network boundary controller may find an identity of source and destination network addresses corresponding to the same NAT. Where the network boundary controller has received a data transmission from an NAT, it may direct the data transmission back to the same NAT. The said same NAT will then direct the data transmission received from the network boundary controller to network endpoints within the subnetwork in which the NAT is located.

According to a preferred implementation of the method, the source and destination path network elements of the data transmission are network boundary controllers. This means that when the network boundary controller compares the source and destination path network elements as to their mutual identity, it will compare the addresses of two network boundary controllers, whereby the network boundary controller addresses may be one and the same. This means that the entry and exit point of the data transmission at the subnetwork may be associated with one and the same network boundary controller. The network boundary controller may compare its own network address with itself or another network boundary controller.

According to a preferred implementation of the method, the data transmission originates from user equipment and is passed onto at least one NAT.

Preferably the network address comparison is performed every time a network boundary controller receives a request from the user equipment or an application server, in particular also when the data transmission is passed via at least one NAT.

In one advantageous implementation of the method, the network boundary controllers are SBCs (Session Border Controllers).

An SBC is considered to comprise a network element that can control the signalling and the data transmissions involved in setting up, conducting, and tearing down calls via a network. In particular, the SBC may find usage in a VoIP network.

A session is considered in particular to comprise a data transmission, such as a call, through a network. Each data transmission may consist of one or more signalling streams that control the data transmission, and one or more media streams which carry the data transmission's audio, video, or other data along with information concerning how that data is flowing across the network. Together, these streams make up a session, and the Session Border Controller may control the data transmissions that make up one or more sessions.

A Controller within the meaning of an SBC refers to the influence that the SBC has on the data streams that comprise sessions, as they traverse boundaries between one part of a network and another. Additionally, the SBC may provide measurement, access control, and data conversion facilities for the data transmissions it controls.

It was found that in using SBCs as network boundary controllers for the proposed method, administrators and / or administrative switching functions can be assisted in managing the flow of session data across the borders of a network with the said advantage of minimising network resource usage outside of the subnetwork. Measurement, access control and data conversion for data transmissions additionally can be effectively implemented by means of the SBC.

Preferably, the SBC maintains an association between each NAT it may be serving along with addresses of CPEs, such as telephones or PCs with VoIP capability that lie behind that NAT.

According to a preferred implementation of the method, the PDF is invoked by the at least one SBC.

The SBC may itself allocate bandwidth to a data transmission. This implementation has the advantage of making the data flow over the border of a sub network controllable.

According to a preferred implementation of the method, an application server, on which a Softswitch may be mounted, is employed to coordinate data transmissions between the different network elements contained in a data transmission path between source and destination network environments. For example, acknowledgments between parties of a data transmission such as a call may pass through and be coordinated by the application server.

According an implementation of the method, the application server receives information regarding the destination of a transmitted data packet in the latter's header. After determining the destination of the data transmission, the application server replicates the data transmission and forwards it to the destination known to it. Where the user equipment from which a data transmission stems is a phone, the address of the phone may be an IP address. The application server may translate this address into another format usable by destination user equipment, NAT or SBC.

The application server is preferably suited to providing internal tables for coordinating the running of calls. It may comprise a preparatory function for establishing an agreement or a so-called handshake between parties communicating with each other that belong to different or one and the same subnetworks. The application server may keep track of all calls being performed. Billing may also be organised by the application server / Softswitch. Termination signals for terminating a communication session such as a call can be sent by means of a suitable data packet to the application server.

According to a preferred implementation of the method, the signalling path for the data transmission is based on SIP (Session Initiation Protocol).

The addresses of the source and destination network elements to be compared can advantageously be a part of an SIP header contained in a data packet of a data transmission.

SIP header information can be modified by an SBC that has a corresponding ability. In particular, the SBC can alter the SIP header information to signal whether the source and destination environments or addresses are the same or not. For example, the SBC may modify the header of the SIP data packet of a data transmission by adding an extension with a local label or flag.

According to a preferred implementation of the method, the SIP header is modified in a proprietary way. This means that the SIP header will contain information relating to the identity of the calling or called party. For example, within one company, one and the same caller may have several user equipments with different addresses, for example on different company sites. One advantage of adding a proprietary extension of the data transmission is that user-specific information can be transferred via SIP.

According to a preferred implementation of the method, it is a Softswitch / application server that adds the proprietary extension to the data transmission. The proprietary extension may be added to each leg of the data transmission. Where the application server communicates with the network boundary controller, the latter, such as an SBC, along with a possibly used PDF, can easily identify all the different ends of a data transmission tree. These may arise in a situation where there is one originator and multiple receivers for a data transmission. The first leg of the data transmission is considered to be the signalling part between originator and application server and further leg is a signalling part between a destination and application server.

The proprietary extension may include a common call identifier identifying the data packet as originating from one transmission. This advantageously allows for a simple way to associate a data packet with a certain call.

The proprietary extension may also include a branch identifier for the data transmission identifying in which transmission path or branch of data transmission the data packet is being transmitted.

According to a preferred implementation of the method, bandwidth is allocated to a data transmission session such as a call when a setup signal for the data transmission session is received at a first receiver out of a plurality of receivers.

According to a preferred implementation of the method, the proprietary extension to the data transmission constitutes a part of an SIP INVITE data packet that initiates a data transmission session or sequence between transmitter and receiver(s). This advantageously reduces the computations required for packet checking by performing a packet header scan only in case that packet has been identified as the said type of packet.

Next to describing a method for a data transmission or data transmissions, this document also describes a communications network comprising a network element (also termed NAT) with means for performing Network Address Translation and a network boundary controller. The NAT may be part of or border a subnetwork in which Customer Premises Equipment are located. It preferably performs address translations from the address formats of Customer Premises Equipment to address formats interpretable by at least one of the following: a network boundary controller, an application server.

The network boundary controller borders the at least one subnetwork and is connected to the NAT.

The network boundary controller comprises means for comparing the addresses of source and destination path network elements of data transmissions. The network boundary controller further comprises means for making an identity determination of the addresses and means for directing the data transmission within at least one subnetwork based on the identity determination.

The communications network preferably comprises an application server, upon which a Softswitch is mounted. The application server is connected to the at least one network boundary controller and comprises means for coordinating data transmissions between source and destination path network elements of the data transmissions. In particular, it comprises means for coordinating acknowledgment messages concerning a QoS to be maintained between the source and destination path network elements. The communications between the source and destination network elements pass via at least one network boundary controller.

An example of a preferred network boundary controller is an SBC. This preferably comprises means for interpreting data transmission packets, in particular packet headers based on SIP.

The network boundary controller and / or the application server may comprise means for invoking a PDF for controlling communications between the source and destination network elements based on the amount of bandwidth available in a communications channel between them or based on a QoS maintainable between them.

The described methods and embodiments are further elaborated upon by means of the followings examples and figures, whereby:
- Drawing 1: shows a network setup whereby a network boundary controller is connected to a plurality of NATs,
- Drawing 2: shows a network setup whereby a plurality of network boundary controllers are each connected to an NAT,
- Drawing 3: shows a plurality of subnetworks with SBCs at their borders that are connected to each other via a Softswitch with the option of invoking a PDF,
- Drawing 4: shows a signalling sequence for setting up a media stream in a network based on identification of a data transmission as being local or not.

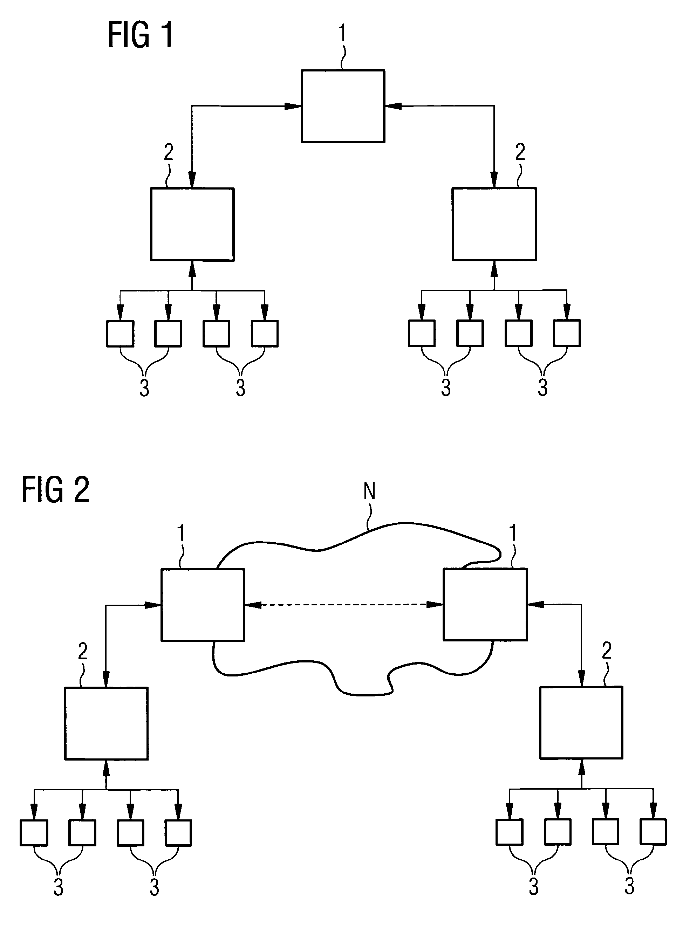

**Figure 1** shows a network setup, whereby a single SBC 1 is connected to a plurality of NATs 2, each connected to a plurality of network endpoints 3 such as CPE, for example telephones. The SBC 1 compares the addresses of the source and destination path network elements of received data transmissions as to their identity. In this case, either the source or destination path network element address will comprise the address given by a NAT as translated from the addresses of the individual network endpoints 3. Since each NAT 2 is univocally connected to a given SBC 1, the signalling associated with both legs of any local call will be directed through the same SBC 1. This enables the SBC to signal each network endpoint to establish a local data transmission by providing the address of the other network endpoint 3. Upon request for the establishment of a local data transmission, the SBC 1 stores the address of the network endpoint 3.

**Figure 2** depicts a network setup wherein two SBCs 1 are each connected to an application server 5 with a Softswitch. The SBCs 1 are logically placed at the edge of local subnetworks comprising the corresponding NAT 2 and the network endpoints 3 behind it. The two SBCs are connectable with each other via an external network N.

Data transmissions, such as calls stemming from network endpoints 3 such as telephones, are transmitted through the subnetworks to the NATs. The NATs 2 perform network address translation before the calls are forwarded to the SBCs 1, each therefore creating unique source and destination address information for each call. This information is contained in the data packets making up the call.

Where a positive identity is determined between source and destination addresses, the SBCs will direct the call back to the subnetwork it originated from. The call thus needn't leave the local network SN, thus saving bandwidth in a network external to the local network SN.

The SBCs may each keep an association between an NAT 2 that they serve along with all the addresses of the network endpoints, such as telephones, behind each NAT 2.

Upon request for the establishment of any local call, the SBC store can store the endpoint caller address. Where SIP is employed, the SBC may store any invitation information in the header of the SIP which may be used for uniquely identifying the call. This may comprise, for example, the source and destination addresses of the call. These may be stored in "From" and "To" fields of the header.

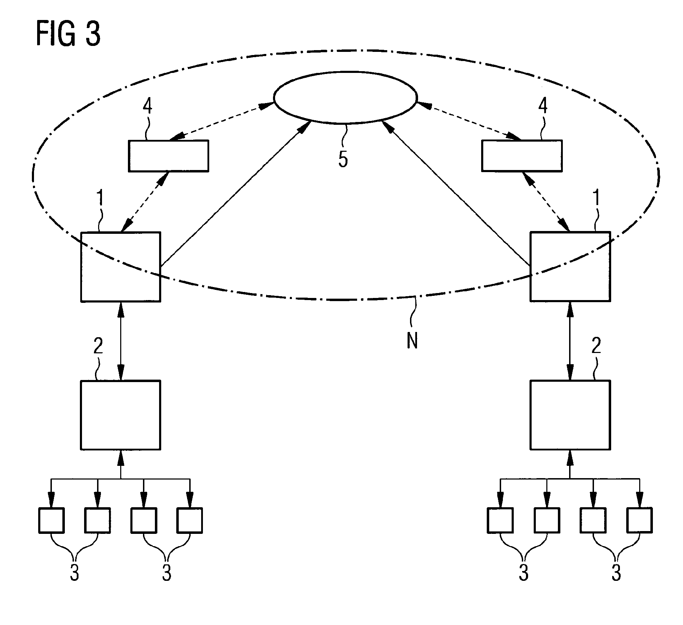

**Figure 3** shows a network topology wherein two subnetworks, each consisting of at least one NAT 2 and a plurality of network endpoints 3 behind it, comprise at least one SBC 1 each at their respective logical borders. The SBCs are connectable with each other via a Softswitch 5. The SBCs 1 or the application server, i.e. Softswitch 5, may each invoke a PDF 4 for policing network transmission based on allocated bandwidth. However, this is an option, so arrows are also shown that connect the SBCs 1 directly to the Softswitch 5. The Softswitch 5 is shown as being contained in an external network N, whereby the SBCs 1 are at the border between the subnetworks that include the network endpoints, the NATs one the one side and the external network on the other.

The Softswitch 5 may invite the SBCs to compare the addresses of the source and destination path network elements contained in the calls received by the SBCs, however this is an optional measure. Instead the SBCs may control each incoming call from an NAT 2 as to the identity of the addresses of the source and destination path network elements of the data transmission.

A PDF invoking function 4 along with the application server 5 may be part of a network management system, belonging, for example, to a telephone company. The PDF invoking function 4 may however be located in another network management entity that that which comprises the application server.

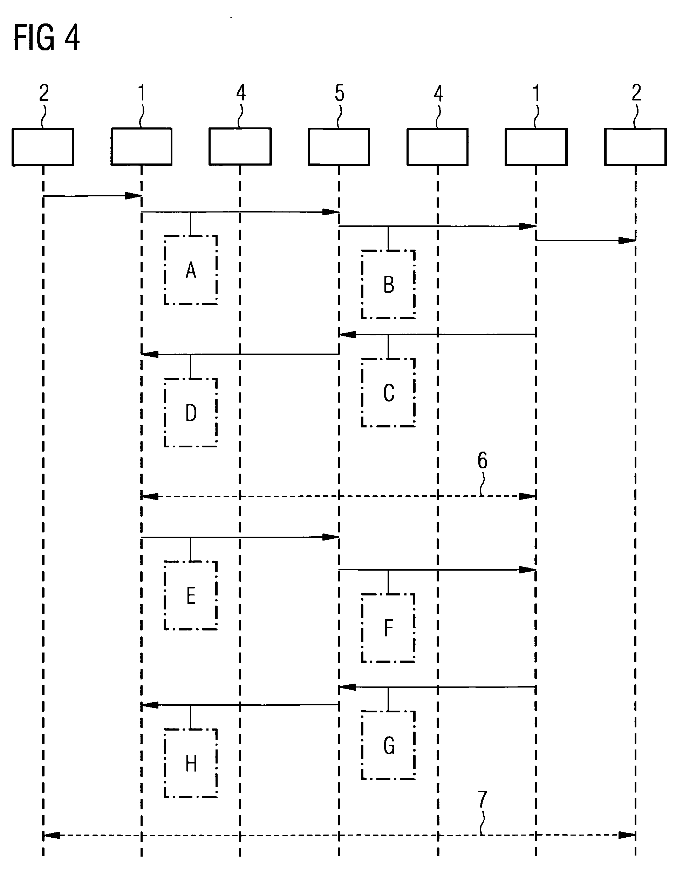

**Figure 4** shows an example of the signalling sequence in a network topology according to figure 3. The following IP addresses correspond to the IP addresses of the respective network elements:
- NAT 2 on the source side:: Port 1: 192.168.10.3
Port 2: 139.21.45.3
- SBC 1 on the source side:: Port 1: 139.21.47.229
Port 2: 145.20.43.1
- Softswitch:: 145.20.43.3
- SBC 1 on the destination side:: Port 1: 139.21.47.100
Port 2: 145.20.43.2
- NAT 2 on the destination side:: Port 1: 192.168.10.2
Port 2: 139.21.45.3

Box A shows the contents of the SIP packet header as written by a source side SBC 1 as follows:
1) SIP INVITE
2) m = audio 6000 RTP/AVP 8
3) c = IN IP4 145.20.33.1
4) a = curr:qos e2e none
5) a = des:qos mandatory e2e sendrecv
6) a = clocal IN IP4 192.168.10.3
7) a = mlocal 5000 RTP/AVP 8
8) a = nat 139.21.45.3

- src:: 145.20.43.1:5500
- dest:: 145.20.43.3:5500

The term "des" in above indicated line 5) denotes a desired level of a quality of service (QoS).

In the above case, the SBC 1 has added extensions according to lines 6) to 8), where these extensions contain indications as to the locality of the data transmission. The data transmission or call has been classified as being local. Furthermore, according to line 8), the SBC includes the IP address 139.21.45.3 of port 2 of the NAT from which it received a call invitation from a user.

The source address src corresponds to the IP address of port 2 of the source side SBC 1. The destination address corresponds to the IP address of the Softswitch 5.

Box B shows the contents of the SIP packet header according to Box A with the sole difference that source and destination addresses (src and dest) are identical, whereby these addresses correspond to those of the one and the same NAT responsible for the CPEs behind it. This clearly shows that the call is local.
1) SIP INVITE
2) m = audio 6000 RTP/AVP 8
3) c = IN IP4 145.20.33.1
4) a = curr:qos e2e none
5) a = des:qos mandatory e2e sendrecv
6) a = clocal IN IP4 192.168.10.3
7) a = mlocal 5000 RTP/AVP 8
8) a = nat 139.21.45.3

- src:: 145.20.43.1:5500
- dest:: 145.20.43.2

The source address src corresponds to the IP address of the Softswitch 5. The destination address dest corresponds to the IP address of port 2 of the destination side SBC 1.

The SIP header is then passed onto the destination side NAT 2. The flowchart of Figure 4 shows that the NAT 2 on the destination side and the one on the source side are one and the same. Thus the message from the SBC 1 on the destination side can be sent both back to the Softswitch 5 and to the one and the same NAT 2. Although Figure 3 shows these as being different, the proposed methods may determine that they are one and the same.

Box C shows the contents of the SIP packet header as returned from the destination side SBC 1 to the Softswitch 5 as follows:
1) SIP 183 Session Progress
2) m = audio 6000 RTP/AVP 8
3) c = IN IP4 192.168.10.2
4) a = curr:qos e2e none
5) a = des:qos mandatory e2e sendrecv
6) a = conf:qos e2e recv

- src:: 145.20.43.2:5500
- dest:: 143.20.43.3:5500

In the above step according to Box C, once the local call has been identified, the c and m fields of the header can be used for passing the address since it is a local call and no bandwidth need be reserved. Nevertheless, line 6 shows that the QoS conditions can be satisfied on the receiver side.

The source address src corresponds to the IP address of port 2 of the destination side SBC 1. The destination address dest corresponds to the IP address of the Softswitch 5.

Box D shows the contents of the SIP packet header as passed on from the Softswitch 5 as follows:
1) SIP 183 Session Progress
2) m = audio 5100 RTP/AVP 8
3) c = IN IP4 192.168.10.2
4) a = curr:qos e2e none
5) a = des:qos mandatory e2e sendrecv
6) a = conf:qos e2e recv

- src:: 145.20.43.3:5500
- dest:: 145.20.43.1:5500

Here, the source address src corresponds to the IP address of the Softswitch 5. The destination address dest corresponds to the IP address of port 2 of the source side SBC 1.

After the alterations to the SIP packet header have been carried out according to Boxes A to D, a series of acknowledgment messages 6 can be sent between the two SBCs 1 via the application server / Softswitch 5. In particular, provisional acknowledgment messages can be sent between the SBCs. These certify that both SBCs have agreed on the contents of the SDP descriptions on the quality of service. To confirm such an agreement, a supplementary handshake procedure preferably takes place between the SBCs.

Box E shows the contents of the SIP packet header as written by the SBC 1 on the source side and sent to the Softswitch 5 as follows:
1) SIP UPDATE
2) m = audio 5100 RTP/AVP 8
3) c = IN IP4 192.168.10.3
4) a = curr:qos e2e send
5) a = des:qos mandatory e2e sendrecv

- src:: 145.20.43.1:5500
- dest:: 145.20.43.3:5500

Here, the source side SBC 1 sends an update SIP packet header to the Softswitch 5 with another proposal. The source address corresponds to the IP address of port 2 of the source side SBC 1 and the destination address to the IP address of the Softswitch 5.

Box F shows the contents of the SIP packet header as written by the Softswitch 5 and sent to the destination side NAT 2 as follows:
1) SIP UPDATE
2) m = audio 5100 RTP/AVP 8
3) c = IN IP4 192.168.10.3
4) a = curr:qos e2e send
5) a = des:qos mandatory e2e sendrecv

- src:: 139.20.43.3:5500
- dest:: 145.20.43.2:5500

The difference between this information and that shown in box E lies in the source and destination addresses for the call to be set up.

Box G shows the contents of the SIP packet header as written by the destination side NAT 2 and sent to Softswitch 5 as follows:
1) SIP 200 OK (UPDATE)
2) m = audio 5000 RTP/AVP 8
3) c = IN IP4 7.92.168.10.2
4) a = curr:qos e2e sendrecv
5) a = des:qos mandatory e2e sendrecv

- src:: 145.20.43.2:5500
- dest:: 145.20.43.3:5500

Here, the source IP address corresponds to port 2 of the destination side SBC 1. The destination IP address corresponds to the IP address of the Softswitch 5.

Box H shows the contents of the SIP packet header as written by the Softswitch 5 and sent to source side SBC 1 as follows:
1) SIP 200 OK (UPDATE)
2) m = audio 5100 RTP/AVP 8
3) c = IN IP4 192.168.10.2
4) a = curr:qos e2e sendrecv
5) a = des:qos mandatory e2e sendrecv

- src:: 145.20.43.2:5500
- dest:: 145.20.43.1

Here, the source address corresponds to the IP address of the Softswitch and the destination address to the IP address of port 2 of source side SBC 1.

Following the procedure laid out according to the contents of Boxes E to H, a series of ring tones and acknowledgment messages 7 can be sent between the source and destination CPE. Thereafter, a media flow can take place between the two, such as a call.

### List of Abbreviations

- 1: Network Boundary Controller
- 2: Network Address Translator
- 3: Network Endpoint such as Customer Premises Equipment
- 4: Policy Decision Function
- 5: Softswitch / Application Server
- 6: Sequence of acknowledgment messages
- 7: Sequence of ring tones and acknowledgment messages

- N: external or IP backbone network

## Claims

1. Method for directing a data transmission through a network, whereby
- a network boundary controller (1) bordering a subnetwork compares addresses of a source and destination path network element, whereby
- a positive identity determination of the addresses is employed as a criterion to direct the data transmission within the subnetwork.

2. Method according claim 1, whereby the data transmission is classified as being local according to the positive identity determination.

3. Method according to claim 1, whereby the data transmission is classified as being non-local according to a non-positive identity determination.

4. Method according to claims 2 or 3, whereby the classification is performed by the network boundary controller (1).

5. Method according to claim 4, whereby a Policy Decision Function (4) decides upon directing the data transmission based on the bandwidth available in the transmission path as classified.

6. Method according to claim 5, whereby the Policy Decision Function (4) allocates bandwidth to the data transmission.

7. Method according to one of the claims 5 or 6, whereby the Policy Decision Function (4) is invoked by the network boundary controller (1).

8. Method according to one of the preceding claims, whereby the address of the source path network element is the address of a network element (2) with means for performing NAT.

9. Method according to one of the claims 1 to 7, whereby the address of the source path network element is the address of a network boundary controller (1).

10. Method according to one of preceding claims, whereby the address of the destination path network element is the address of a network element (2) with means for performing NAT.

11. Method according to one of the claims 1 to 9, whereby the address of the destination path network element is the address of a network boundary controller (1).

12. Method according to one of the claims 1 to 8, whereby the addresses of both the source and the destination path network elements are the address of one network element (2) with means for performing NAT.

13. Method according to one of the claims 1 to 7, whereby the addresses of both the source and the destination path network element are the address of one network boundary controller (1).

14. Method according to one of the preceding claims, whereby RTP is used as a carrier protocol for the data transmission.

15. Method according to one of the preceding claims, whereby SIP is used as a signalling protocol for the data transmission.

16. Method according to claim 15, whereby the addresses of the source and destination path network elements to be compared are part of the SIP header.

17. Method according to one of the preceding claims, whereby the network boundary controller (1) comprises an SBC.

18. Method according to one of the preceding claims, whereby the data transmission is sent from an application server (5) to the at least one network element (2) with means for performing NAT.

19. Method according to claim 18, whereby the address comparison is performed when at least one network boundary controller (1) receives a request from the application server (5) via the at least one NAT (2).

20. Method according to claim 19, whereby the application server (5) adds a proprietary extension to each data packet.

21. Method according to claim 20, whereby the proprietary extension includes a common call identifier identifying the data packet as originating from one data transmission session.

22. Method according to claim 20, whereby the proprietary extension includes a different branch identifier identifying in which transmission path the data packet is being transmitted.

23. Method according to one of the preceding claims, whereby the network boundary controller (1) allocates bandwidth to the data transmission.

24. Method according to one of the claims 19 to 22, whereby the bandwidth is allocated when a specific proprietary extension to a data packet is received at a first receiver.

25. Method according to one of the preceding claims, wherein the data transmission constitutes a part of a communication session based on an IP protocol.

26. Method according to one of the preceding claims, wherein the data transmission constitutes a part of a communication session based on a Voice over IP protocol.

27. Communications network, comprising:
- Customer Premises Equipment (3) in at least one subnetwork connected to at least one network element (2) with means for performing Network Address Translation, and
- at least one network boundary controller (1) connected to the at least one network element with means for Network Address Translation and bordering the at least one subnetwork, whereby the at least one network boundary controller comprises means for comparing the addresses of source and destination path network elements of data transmissions, wherein
- the at least one network boundary controller comprises means for making an identity determination of the addresses and means for directing the data transmission within the at least one subnetwork based on the identity determination,
- an application server (5), upon which a Softswitch is mounted, connected to the at least one network boundary controller, wherein the application server comprises means for coordinating data transmissions between source and destination path network elements of the data transmissions.

28. Communications network according to claim 27, wherein the network boundary controller (1) comprises a Session Boundary Controller.

29. Communications network according to claim 27 or 28, wherein the application server (5) comprises means for coordinating acknowledgment messages for Quality of Service levels agreed upon by source and destination path network elements of the data transmissions.

30. Communications network according to one of the claims 27 to 29, wherein a Policy Decision Function (4) is invokable by the network boundary controller (1).

31. Communications network according to claims 27 to 29, wherein a Policy Decision Function (4) is invokable by the application server (5).
